# EUROPEAN PATENT APPLICATION

(11) **EP 4 092 565 A1**
(43) Date of publication of application: **23.11.2022**
(21) Application number: 21174668.0
(22) Date of filing: 19.05.2021
(51) Int. Cl.: G06K 9/00, G06K 9/62

(54) **DEVICE AND METHOD TO SPEED UP ANNOTATION QUALITY CHECK PROCESS**

(71) Applicant: Continental Autonomous Mobility Germany GmbH, 85057 Ingolstadt (DE)
(72) Inventor: Aleksziev, Rita Antonia, 90411 Nürnberg (DE); Deak-Meszlenyi, Regina, 90411 Nürnberg (DE)
(74) Representative: Continental Corporation

(57) **Abstract**

The present invention relates to a device (100) and a method to speed up annotation quality check process, the device (100) comprising: a data obtaining module (10), which is configured to obtain an annotated dataset of image data annotated with identifiers for image processing tasks; and a machine learning module (20), which is configured to determine a subset of the annotated dataset, the subset comprising identifiers with a fault confidence higher than a threshold, wherein the machine learning module (20) is further configured to output the determined subset of the annotated dataset.

Another aspect of the invention relates to a vehicular (e.g. an automotive) perception system comprising at least one sensor, a processing unit and an output unit. The processing unit is configured to process the data by employing a second machine learning module which has been trained based on data that have been validated by using a method according to an embodiment as described above, and to generate a perception result from processing the data.

## Description

### FIELD OF THE INVENTION

The present invention relates to the field of front-facing or surround view or multi-functional camera images, annotation quality check in general. Particularly, the present invention relates to a device to speed up annotation quality check process, a corresponding method and a vehicular perception system built by employing such a device or method.

### BACKGROUND OF THE INVENTION

For every manually annotated dataset, a certain amount (e.g. 10 %) of the data samples are randomly selected for a quality check. A machine-learning engineer manually goes through this subset of data looking for errors.

If less than a certain amount (e.g. 2 %) of the random sample is faulty, then the annotation is accepted. Otherwise, the quality of the annotation is not satisfactory, and the dataset is returned to the labeling team for improvement.

This quality checking process of annotated data is usually a time-consuming manual task, and the amount of discovered errors is largely dependent on the skill and patience of the machine learning engineer.

Methods to semi-automatize this task exist in the scientific literature, but these are usually not flexible enough for industrial applications.

Prior art includes labeling source data using confidence labels and estimating uncertainty in dataset labels for classification.
Thus, there is high need of automated processing.

The prior art methods have several drawbacks. The use of confidence labels is static for a given dataset, meaning that it is not robust for factors such as the differences between human annotators skill or level of tiredness.

The method itself is calibrated for one specific set of annotators with steady performance and for one specific data distribution. Confidence labels need to be recalculated every time the method is applied, which is time-consuming, expensive, and not always feasible.

Estimating uncertainty in dataset labels (also known as Confident Learning) is designed to be used for classification data, which is insufficient for industry applications.

### SUMMARY OF THE INVENTION

There may be a need to optimize checking the quality of annotated data. The solution as provided by the present invention addresses the problems associated with current data quality checking methods, namely the large amount of human labor needed, the lack of speed and flexibility, and the lack of generalization for many relevant tasks.

These needs are met by the subject-matter of the independent claims. Further exemplary embodiments are evident from the dependent claims and the following description.

An aspect of the present invention relates to a device to speed up annotation quality check process the device comprising: a data obtaining module, which is configured to obtain an annotated dataset of image data annotated with identifiers for image processing tasks; and a (first) machine learning module, which is configured to determine a subset of the annotated dataset, the subset comprising identifiers with a fault confidence higher than a threshold, wherein the machine learning module is further configured to output the determined subset of the annotated dataset. The subset may e.g. be provided to a user for a user-performed image processing task.

The machine learning module may comprise one or more artificial neural networks. An artificial neural network may be a convolutional neural network (CNN). The machine learning module may have been trained, e.g. via supervised learning, for its task to determine such subsets.
For the training of the machine learning module, training data can be provided. The training data comprises training input data (i.e. sensor input data with annotations) and corresponding training target data. The training target data comprises a measure of confidence regarding the correctness of the annotations. The training target data may be provided by a human supervisor.
Training comprises e.g. adapting parameters of the machine learning module in such a way, that the machine learning module produces output data for training input data that are similar to the training target data. The parameters may comprise for artificial neural networks weights between single input nodes and neurons of the artificial neural network. During supervised training, the machine learning module adapts the parameters in such a way that the difference from its output data to the respective training target data decreases. For the training of an artificial neural network, e.g. a backpropagation method can be applied. The difference between the produced output data and the training target data can be measured as a kind of distance by a metrics. The training may be seen as completed once the difference or distance is lower than a training threshold.
Another aspect of the present invention provides a method to speed up annotation quality check process, the method comprising the following steps of: Obtaining an annotated dataset of sensor data annotated with identifiers for sensor data processing tasks; Determining a subset of the annotated dataset, the subset comprising identifiers with a fault confidence higher than a threshold; and Outputting the determined subset of the annotated dataset.

Machine Learning methods require high-quality annotated data in order to provide solutions to technical problems, like e.g. image data classification, object detection, semantic segmentation or instance segmentation.

The fault confidence is, for instance, calculated by a machine learning model to define a certain level of confidence. In other words, how confident the model is about an (annotation) error occurring. The confidence threshold is not predefined, but calculated by averaging the self-confidence values for each class.

The present invention is based on an approach in terms of a method and a system that is able to evaluate and optimize datasets annotated for real-life ADAS (advanced driver assistance system) or AD (automated driving) tasks like object detection, semantic segmentation or instance segmentation.

The present invention is for instance based on use-cases like datasets of image data for ADAS or AD systems and all of them could be used for real-time or non-real-time applications. Real-time applications include the usage of a machine learning module (e.g. artificial neural network) that has been trained with annotated data in a camera- or lidar- or radar-based ADAS or AD system in a driving car.

The present invention is for instance based on sensor data classification, object detection, semantic segmentation, or instance segmentation. The present invention can be applied for key point detection, depth estimation or point cloud processing.

In other words, the present invention allows applying an automated sorting method to object detection data to semantic segmentation or instance segmentation data.

According to an exemplary embodiment of the present invention, the machine learning module is configured to calculate the threshold as a per-class confidence threshold based on a classification of the identifiers.

According to an exemplary embodiment of the present invention, the data obtaining module is configured to obtain the annotated dataset comprising object detection data.

According to an exemplary embodiment of the present invention, the annotated dataset of sensor data, e.g. image data, is labeled for semantic segmentation or instance segmentation data.

According to an exemplary embodiment of the present invention, the machine learning module is configured to search for labeling errors in the annotated dataset of sensor data for driver-assistance systems, for key point detection and depth estimation, and for point cloud processing.

According to an exemplary embodiment of the present invention, the device is configured to support object detection, keypoint detection, depth estimation, point cloud processing, semantic segmentation or instance segmentation data.

A computer program performing the method of the present invention may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) or an EPROM (Erasable Programmable Read Only Memory).

A computer-readable medium may also be a data communication network, for example the Internet, which allows downloading a program code.

Another exemplary embodiment of the present invention concerns a method to validate an annotation quality of annotated sensor data. The method comprises the followings steps:
- Obtaining an annotated dataset of sensor data annotated with identifiers for image processing tasks;
- Determining a subset of the annotated dataset, the subset comprising identifiers with a fault confidence higher than a threshold; and
- Outputting the determined subset of the annotated dataset.

According to an embodiment, the sensor data are data from at least one of:
a monocular and/or a stereo camera, multiple cameras, a surround view camera system, a lidar, a radar and/or an ultrasonic sensor.

According to an embodiment, the at least one sensor is a sensor of a vehicle and the sensor is sensing properties of the environment of the vehicle.

Another exemplary embodiment of the present invention concerns a vehicular (e.g. an automotive) perception system comprising at least one sensor, a processing unit and an output unit. The at least one sensor is configured to sense properties of the environment of the vehicle. The processing unit is configured to receive data of the at least one sensor and to process the data by employing a second machine learning module which has been trained based on data that have been validated by using a method according to an embodiment as described above, and to generate a perception result from processing the data. The output unit is configured to output the perception result. In other words, the second machine learning module has been trained by using second training data which have been validated. The validation was supported by the (first) machine learning module or the validation method was applied in order to obtain the second training data. The second machine learning module may correspond to the machine learning module (or trained neural network) which is implemented in a vehicle. Whereas the first machine learning module was e.g. used to determine the possibly faulty labeled subset of annotated second training data.

According to an embodiment, the processing of the sensor data by the second machine learning module generates object detection, keypoint detection, depth estimation, point cloud processing, semantic segmentation and/or instance segmentation results.

According to an embodiment, the output unit is configured to output the perception result to an ADAS or AD control unit in order to facilitate assisted or automated driving of the vehicle.

The methods, systems, and devices described herein may be implemented as software in a Digital Signal Processor, DSP, in a micro-controller or in any other processor, in a central processing unit, CPU, in a graphics processing unit, GPU or as a hardware circuit within an application specific integrated circuit, ASIC, a complex programmable logic device, CPLD or a field programmable gate array, FPGA.

The present invention can be implemented in digital electronic circuitry or in computer hardware, firmware, software, or in combinations thereof, for instance in available hardware of conventional medical imaging devices or in new hardware dedicated for processing the methods described herein.

### BRIEF DESCRIPTION OF THE DRAWINGS

A more complete appreciation of the invention and the attendant advantages thereof will be clearly understood by reference to the following schematic drawings, which are not to scale, wherein:
- Fig. 1: shows a schematic flowchart diagram for a method to speed up annotation quality check process according to an exemplary embodiment of the present invention;
- Fig. 2: shows a schematic diagram for a device to speed up annotation quality check process according to an exemplary embodiment of the present invention;
- Fig. 3: shows a schematic flowchart diagram for a method to speed up annotation quality check process according to an exemplary embodiment of the present invention;
- Fig. 4: shows a schematic flowchart diagram for a method to find labeling errors according to an exemplary embodiment of the present invention;

### DETAILED DESCRIPTION OF EMBODIMENTS

The illustration in the drawings is purely schematic and does not intend to provide scaling relations or size information. In different drawings, similar or identical elements are provided with the same reference numerals.

Generally, identical parts, units, entities or steps are provided with the same reference symbols in the description.

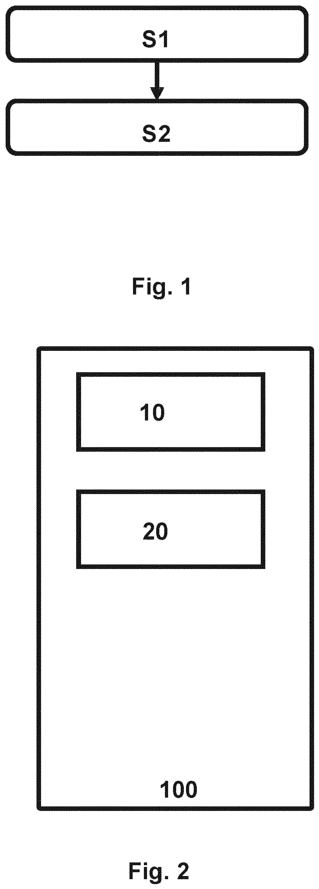

Fig. 1 shows a schematic flowchart diagram for a method to speed up annotation quality check process according to an exemplary embodiment of the present invention.

The method is directed to find labeling errors and to speed up annotation quality check process for sensor data, e.g. of an environmental sensor of a vehicle comprises the following steps:
As a first step of the method, obtaining S1 an annotated dataset of sensor (e.g. image) data annotated with identifiers for sensor data (or image) processing tasks is performed.

As a second step of the method, determining S2 a subset of the annotated dataset, the subset comprising identifiers with a fault confidence higher than a threshold is conducted.

As a third step of the method, outputting the determined subset of the annotated dataset, e.g. to a user who can then perform a manual labelling error validation task.

In one example, the sensor data are image data because the sensor is an imaging sensor (e.g. a camera). The image data annotated for image processing tasks in terms of the determined subset of the annotated dataset can be provided to a user for a manual checking process, namely object detection, semantic segmentation and instance segmentation for the car's front facing camera. However, the method and system can be directly applied to other kinds of manually annotated data. Upon receiving a dataset, the method and system proposes a subset of the data comprising samples with high confidence (or probability) of being faulty. This way the machine learning engineer or user can start the manual checking process with these high-risk images and has a high chance to be able to find the given amount (e.g. 2 %) of label errors without going through a much bigger subset (e.g. 10 %).

The present invention may for instance be applied in image processing, video broadcasting, V2X communication, e.g. vehicle to anything communication, or for infotainment application of a vehicle.

Fig. 2 shows a schematic diagram for a device to find labeling errors and to speed up annotation quality check process according to an exemplary embodiment of the present invention.

Fig. 2 shows a device 100 to find labeling errors and to speed up annotation quality check process.
The device 100 further comprises a data obtaining module 10, which is configured to obtain an annotated dataset of image data annotated with identifiers for image processing tasks

The device 100 further comprises a machine learning module 20, which is configured to determine a subset of the annotated dataset, the subset comprising identifiers with a fault confidence higher than a threshold.

The machine learning module 20 is further configured to output the determined subset of the annotated dataset. Based on the output subset a user can perform an image processing task or manual label check only on this subset.

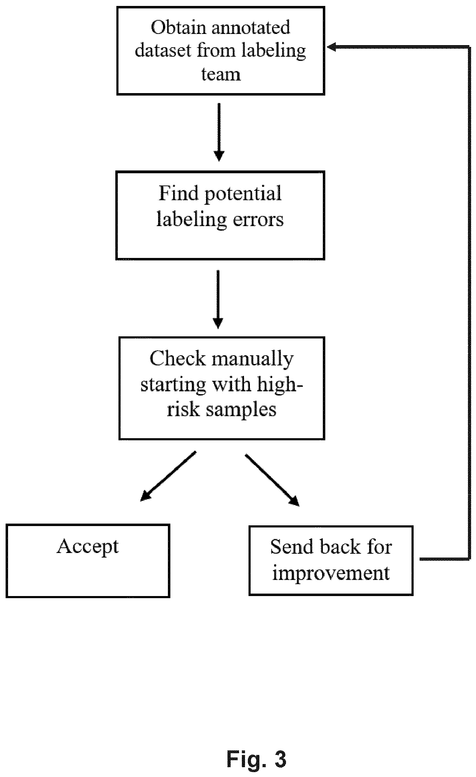

Fig. 3 shows a schematic flowchart diagram for a method to speed up annotation quality check process according to an exemplary embodiment of the present invention.

According to an exemplary embodiment of the present invention, the invention is implanted in a method and a system, which is directed and configured to find labeling errors and to speed up the process of data annotation quality checking as shown in Figure 3.

According to an exemplary embodiment of the present invention, the invention may be applied to image data annotated for image processing tasks, namely object detection, semantic segmentation or instance segmentation for the car's front facing camera.

According to an exemplary embodiment of the present invention, the method and system can be straightforwardly applied to other kinds of manually annotated data.

According to an exemplary embodiment of the present invention, upon receiving a dataset, the method and system proposes a subset of the data consisting of samples with high probability of being faulty, i.e. the confidence (that the annotation is correct) of the validation model is for such samples lower than for other samples (where the confidence is e.g. average).

This way the machine learning engineer can start the manual checking process with these high-risk images and has a high chance to be able to find the given amount (e.g. 2 %) of label errors without going through a much bigger subset (e.g. 10 %).

According to an exemplary embodiment of the present invention, beside proposing the subset of high-risk images, the invention is capable of pointing out the potential errors. This can be achieved with the help of another (third) neural network that was trained for this specific task. The point is that this third network doesn't need to be extremely good either. A fairly good model can find outliers in its own predictions. In an example if the pose of a car is annotated as "front" instead of "back", and the method finds this potential error, then it can make a suggestion for the potential correct pose. This helps a human validator to validate the annotation quality even faster and to find typical annotation errors.

This means that the machine-learning engineer does not have to search for the errors on a given frame but can look for the specific mistakes proposed by the system, which speeds up the whole process tremendously.

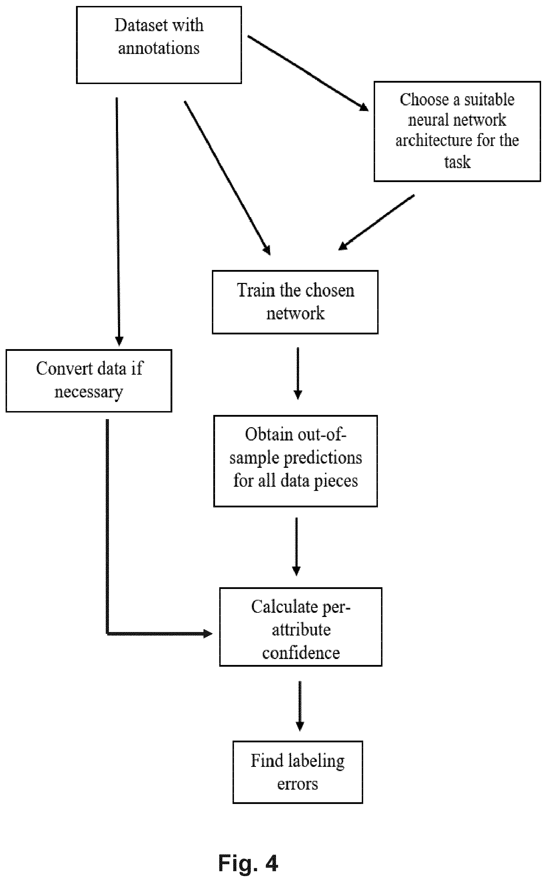

Fig. 4 shows a schematic flowchart diagram for a method to speed up annotation quality check process according to an exemplary embodiment of the present invention.

According to an exemplary embodiment of the present invention, potential labeling errors are identified as described in Figure 4.

First, the method obtains out-of-sample label predictions for all data samples from a well-performing artificial neural network (ANN). This can be done by either cross-validation or by using a model that has been trained on a different dataset for the same task. Such a "well-performing ANN" does not have to achieve perfect or almost perfect accuracy during validation. Therefore, the performance requirements are realistic.

According to an exemplary embodiment of the present invention, the device and the method is applied to one or more artificial neural networks which are used as machine learning module.

According to an exemplary embodiment of the present invention, the device and the method is applied for classification data. In this case, using the out-of-sample predicted probabilities. The system calculates per-class confidence thresholds defined by the average self-confidence for each class. There may be classes for different daylight conditions in camera image frames (e.g. daylight, night, etc.). In this case, an average self-confidence for the class night corresponds to the average predicted probability of class "night" for all frames that have been labeled "night"). According to an exemplary embodiment of the present invention, at first, a self-confidence threshold for each class is calculated. For example, for the "night" class, we take every image that has been labeled as "night" according to the employed model. There might be some errors in these predictions, but it is unknown which labels are incorrect, and it is not of any importance at this point. By taking these "night" images, the confidence that the model attributed to them can be averaged. If the model is very confident in an image, then it will output confidences like "0.7 night, 0.1 dawn, 0.1 morning, 0.1 afternoon". For harder examples, it will be more like "0.4 night, 0.3 dawn, 0.1 morning, 0.2 afternoon". Averaging the 0.7 and the 0.4, the winning confidences, results in an average confidence of 0.55 for these two "night" images. Calculating this average through every image where "night" won the prediction provides as the result the per-class confidence threshold. It will be high for easy classes and low for hard classes.
In an example, the threshold for "night" turns out to be 0.4. A high-risk example would be an image with predictions "0.45 night, 0.5 dawn, 0.05 morning, 0.0 afternoon", because although it is categorized as "dawn", its "night" confidence is higher than the "night" threshold which is 0.4. Therefore, the high-risk examples are the ones where the model confidence is higher than the threshold for a class different from the one it is labeled as.

According to an exemplary embodiment of the present invention, the invention can be used for object detection in sensor data. For object detection in image data, objects can be detected by using bounding boxes in image frames. Once the machine learning module (e.g. ANN) has been trained, it will predict bounding boxes for novel image data where it is detecting objects. It is assumed that the novel image data is labeled (annotated) as well, e.g. by a human instructor or otherwise. However, the trained ANN is not aware of the annotated data, e.g. labeled objects, because the novel data were not used during the training. By matching the out-of-sample box predictions of the network to the annotated boxes using IoU (ratio of Intersection over Union, cf. "Jaccard index") matching is performed, meaning that pairing a predicted box with a labeled box if their IoU score is larger than a given threshold (e.g. 0.75).
If a predicted box has more than one match, then the one with the largest IoU score is picked. If a predicted box does not have any matches, then its annotated class is considered to be background.

After this matching step, a predefined number of labels can be assigned to each box (both predicted and annotated): a number of them are obtained by dividing the whole image into a grid and rounding the box coordinates (e.g. top, bottom, left, right for two-dimensional boxes) accordingly.

The remaining labels for each box are the class label, and any other predefined attributes (e.g. pose, subtype, distance, occlusion, etc.). From this point, considering each box to be a data sample along with their classes is conducted, attributes and rounded coordinates as labels and follow the above-mentioned steps for classification data.

According to an exemplary embodiment of the present invention, the boxes are two-dimensional, and number of box coordinates is 4 (top, bottom, left, right).

According to an exemplary embodiment of the present invention for 3D sensor data (e.g. point clouds, 3D images), the boxes are three-dimensional cuboids, and the number of box coordinates is 16 (8 corner locations with x, y coordinates and 8 visibility attributes).

According to a different exemplary embodiment of the present invention, the invention may for instance be applied for semantic segmentation data. In this case, dividing the image into a grid along with its semantic segmentation masks (both predicted and annotated) is performed.

Each grid cell is then treated as a data sample, assigning the majority class of the pixels in it to the cell as class label. Then the steps applied above for classification data, i.e. the ones with the per-class confidence threshold and the high-risk examples, are performed. The idea here is that a solution for the classification task exists, so every other task can be reduced to multiple classification tasks. According to an exemplary embodiment of the present invention, the dataset is labeled for instance segmentation. In this case, each instance is treated as its own image. In a mask image, everything else than the instance is masked out, i.e. pixels not belonging to the instance are equal to zero. These mask images have the same size as the source image itself.

The method matches the out-of-sample instance predictions of the network to the annotated instances using IoU matching in a similar way to the object detection task described above. Using IoU matching means e.g. pairing a predicted instance with a labeled instance if their IoU score is larger than a given threshold (e.g. 0.75).

According to an exemplary embodiment of the present invention, in the case of semantic categories, e.g. sky, the matching is unnecessary and can be omitted. Following the matching process, dividing the image into a grid along with its instance segmentation masks, both predicted and annotated is performed. Each grid cell of each instance mask is treated as a data sample, assigning the majority class of the pixels in it to the cell as class label.

By implementing the invention labeling errors can be found substantially faster than by purely manual annotation quality checking.

As a result of the "faulty label proposal" by making use of the invention, the number of images and annotations that need to be checked by the machine learning engineer in order to find a certain amount of errors (e.g. 2%) can be reduced significantly. This saves a lot of time and effort and results in higher quality annotated datasets.

According to an exemplary embodiment of the present invention, as an end result, the ADAS or AD products trained on the datasets show better performance.

Further advantages related to the invention is the capability of handling a variety of data annotation tasks, which makes it flexible and suitable for many scenarios. The present invention can cope with varying qualities of the annotators, thus it is dynamic and robust. Even if the annotators get tired and their performance drops, or if you get a completely new group of annotators, the method will adjust to the new situation.

According to an exemplary embodiment of the present invention, datasets annotated for image processing tasks like classification, object detection, semantic segmentation or instance segmentation can be used. The system can be easily adapted to other image processing tasks like key point detection and depth estimation.

According to an exemplary embodiment of the present invention, tasks are used for the front camera's drivable area and lane detection, or parking space detection.

According to an exemplary embodiment of the present invention, key point detection is also applied in pose estimation which can be used for example for pedestrian intention prediction and driver monitoring.

According to an exemplary embodiment of the present invention, the invention is straightforwardly applicable to surround view and interior monitoring camera annotations as well.

According to an exemplary embodiment of the present invention, the invention could be extended to handle other automotive (or vehicle) sensor data as input, e.g. radar or LiDAR point cloud processing. Labeling errors can be detected for e.g. 3D object detection and segmentation.

One embodiment of this invention is a computer program that can be executed on one or more GPUs or CPUs. The program takes a set of images annotated by human annotators as input.

According to an exemplary embodiment of the present invention, annotations for a piece of source data can include a variety of metadata describing the image, including certain attributes of the objects on it, and information about the camera it has been taken with.
According to an exemplary embodiment of the present invention, to propose labeling errors for the front camera's object detection task, the computer program is configured to use a neural network trained to reach the highest object detection performance in terms of bounding box classification and regression accuracy.

According to an exemplary embodiment of the present invention, the program then gives a set of high-risk images together with the problematic labels on them to the machine learning engineer who can use this information to speed up the quality checking process.

Other embodiments include configurations of the method and system that search for labeling errors in datasets annotated for other important tasks for driver-assistance systems, including key point detection and depth estimation, as well as point cloud processing.

Apart from human annotators, data annotation devices include machine-based categorization devices, and/or a combination of machine and human annotation as appropriate to the requirements of specific applications in accordance with embodiments of the invention.

It has to be noted that embodiments of the present invention are described with reference to different subject-matters. In particular, some embodiments are described with reference to method type claims, whereas other embodiments are described with reference to the device type claims.

However, a person skilled in the art will gather from the above and the foregoing description that, unless otherwise notified, in addition to any combination of features belonging to one type of the subject-matter also any combination between features relating to different subject-matters is considered to be disclosed with this application.

However, all features can be combined providing synergetic effects that are more than the simple summation of these features.

While the invention has been illustrated and described in detail in the drawings and foregoing description, such illustration and description are to be considered illustrative or exemplary and not restrictive; the present invention is not limited to the disclosed embodiments.

Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfill the functions of several items recited in the claims.

The mere fact that certain measures are recited in mutually different dependent claims does not indicate that a combination of these measures cannot be used to advantage. Any reference signs in the claims should not be considered as limiting the scope.

## Claims

1. A device (100) to validate an annotation quality of annotated sensor data, the device (100) comprising:
- a data obtaining module (10), which is configured to obtain an annotated dataset of sensor data annotated with identifiers for sensor data processing tasks;
- a machine learning module (20), which is configured to determine a subset of the annotated dataset, the subset comprising identifiers with a fault confidence higher than a threshold;
- wherein the machine learning module (20) is further configured to output the determined subset of the annotated dataset.

2. The device (100) according to claim 1,
wherein the machine learning module (20) is configured to
calculate the threshold as a per-class confidence threshold based on a classification of the identifiers.

3. A method to validate an annotation quality of annotated sensor data, the method comprising the following steps of:
- Obtaining (S1) an annotated dataset of sensor data annotated with identifiers for image processing tasks;
- Determining (S2) a subset of the annotated dataset, the subset comprising identifiers with a fault confidence higher than a threshold; and
- Outputting the determined subset of the annotated dataset.

4. The method according to claim 3,
wherein the method further comprises the step of:
- Calculating the threshold as a per-class confidence threshold based on a classification of the identifiers.

5. The method according to claim 3 or to claim 4,
wherein the annotated dataset of sensor data is annotated for object detection, keypoint detection, depth estimation, point cloud processing, semantic segmentation or instance segmentation.

6. The method according to one of the claims 3 to 5,
wherein the sensor data are data from at least one of:
a monocular and/or a stereo camera, multiple cameras, a surround view camera system, a lidar, a radar and/or an ultrasonic sensor.

7. The method according to one of the claims 3 to 6,
wherein the at least one sensor is a sensor of a vehicle and the sensor is sensing properties of the environment of the vehicle.

8. A computer-readable storage medium comprising instructions which, when executed by a computer, cause the computer to carry out the steps of the method of any one of the claims 3 to 7.

9. A vehicular perception system comprising at least one sensor, a processing unit and an output unit, wherein:
- the at least one sensor is configured to sense properties of the environment of the vehicle,
- the processing unit is configured to receive data of the at least one sensor and to process the data by employing a second machine learning module which has been trained based on data that have been validated by using a method according to one of the claims 3 to 7, and to generate a perception result from processing the data, and
- the output unit is configured to output the perception result.

10. A vehicular perception system according to claim 9,
wherein the at least one sensor comprises at least one of:
a monocular and/or a stereo camera, multiple cameras, a surround view camera system, a lidar, a radar and/or an ultrasonic sensor.

11. A vehicular perception system according to claim 9 or 10,
wherein the processing of the sensor data generates object detection, keypoint detection, depth estimation, point cloud processing, semantic segmentation and/or instance segmentation results.

12. A vehicular perception system according to one of the claims 9 to 11, wherein the output unit is configured to output the perception result to an ADAS or AD control unit in order to facilitate assisted or automated driving of the vehicle.
